# EUROPEAN PATENT SPECIFICATION

(11) **EP 1 651 716 B1**
(45) Date of publication and mention of the grant of the patent: **16.09.2009**
(21) Application number: 03817808.3
(22) Date of filing: 09.12.2003
(51) Int. Cl.: C08K 5/5317

(54) **FLAMEPROOF THERMOPLASTIC RESIN COMPOSITION**
FLAMMGESCHÜTZTE THERMOPLASTISCHE HARZZUSAMMENSETZUNG
COMPOSITION DE RESINE THERMOPLASTIQUE IGNIFUGE

(30) Priority: 04.08.2003 KR 2003053856
(43) Date of publication of application: 03.05.2006
(73) Proprietor: Cheil Industries Inc., Gumi-si, Gyeongsangbuk-do 730-710 (KR)
(72) Inventor: RYU, Young Sik, Anyang-si, 431-080 Gyeonggi-do (KR); HONG, Sang Hyun, 152-843 Seoul (KR); AHN, Sung Hee, Seongdong-gu, 133-020 Seoul (KR); YANG, Jae Ho, Gunpo-si, 435-040 Gyeonggi-do (KR); BAE, Su Hak, Seongdong-gu, 133-112 Seoul (KR); JIN, Soon Young, Okcheon-gun, 373-804 Chungcheongbuk-do (KR)
(74) Representative: Bublak, Wolfgang
(86) International application number: PCT/KR2003/002688
(87) International publication number: WO 2005/012416

(56) References cited:
- EP-A- 0 075 863
- EP-A1- 1 069 157
- WO-A-20/04029143
- WO-A1-98/11160
- DE-A1- 19 637 368
- JP-A- 11 140 270
- JP-A- 2001 040 172
- US-A- 3 849 368
- US-A- 5 859 147

## Description

### Field of the Invention

The present invention relates to a flameproof thermoplastic resin composition which has excellent processability, mechanical properties, and environment-friendly effect. More particularly, the present invention relates to a flameproof thermoplastic resin composition employing a ring-shaped alkyl phosphonic acid compound and an aromatic phosphoric acid ester compound instead of a halogen flame retardant.

### Background of the Invention

A rubber modified styrenic resin is excellent in mold processability and mechanical properties, therefore, the resin has been widely applied to electric or electronic goods and office supplies. However, the disadvantage could be observed when the rubber modified styrenic resin is employed to heat-emitting products, because the styrenic resin is extremely easily flammable. Therefore, the methods for improving the flame-retardant property of the rubber-modified styrenic resin have been developed.

A widely known method for flame retardancy is that a halogen-containing compound is added to a rubber modified styrene-containing resin to give a good flame-retardant property. The examples of the halogen-containing compounds used in the method above are, for example, polybromodiphenyl ether, tetrabromobisphenol-A, epoxy compounds substituted by bromine. In addition, an antimony-containing compound is commonly used along with the halogen-containing compound in order to increase flame retardancy. However, the disadvantages could be observed that the halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or difuran during combustion. So, a major concern in this field is to develop a flame retardant which is prepared without a halogen-containing compound.

U.S. patent No. 3,639,506 discloses resin composition using mono aromatic phosphoric acid ester such as triphenylphosphate to a blend of styrenic resin and polyphenylene ether resin. However, deterioration of heat resistance and juicing crack phenomenon are observed during molding process due to triphenyl phosphate since the triphenyl phosphate is highly volatile.

In order to solve the above volatility problem, Japanese Patent Laid-open No. 7-043769 discloses that the use of phosphoric acid ester compound having a substituent containing 12 to 25 carbon atoms derived from TPP to a rubber-reinforced styrenic resin (HIPS), which may obtain anti-dripping flame-retardancy. Further, Japanese Patent Laid-open No. 5-1079 discloses an aromatic diphosphate which contains phenyl linkage in its structure. However, in these cases, a large amount of flame retardant is needed to obtain anti-dripping flame-retardancy, which leads to deterioration of heat resistance.

Accordingly, the present inventors have developed a flame retardant thermoplastic resin composition which has anti-dripping flame retardancy by employing ring-shaped alkyl phosphonic acid compound to rubber modified styrenic resin. The thermoplastic resin composition of the present invention does not show deterioration of heat resistance or volatility problem.

### Objects of the Invention

An object of the present invention is to provide thermoplastic resin composition with good flame retardancy by employing the rubber-modified styrenic resin, the ring-shaped alkyl phosphonic acid compound and aromatic phosphoric acid ester compound.

Another object of the present invention is to provide a flame retardant thermoplastic resin composition with good properties, such as impact strength and heat resistance.

A further object of the present invention is to provide an environmentally friendly and non-toxic flame retardant thermoplastic resin composition which does not contain a halogen-containing compound.

Other objects and advantages of this invention will be apparent from the ensuing disclosure and appended claims.

### Summary of the Invention

The flameproof thermoplastic resin composition according to the present invention comprises (A) 100 parts by weight of a rubber modified styrenic resin consisting of (a₁) 10 to 100 % by weight of a grafted copolymer resin prepared by graft polymerization with 5 to 65 parts by weight of a rubber phase polymer, 35 to 95 parts by weight of an aromatic vinyl monomer, 1 to 20 parts by weight of a monomer copolymerizable with said aromatic vinyl monomer selected from cyanide vinyl-containing compounds and unsaturated nitrile-containing compounds and 0 to 15 parts by weight of a monomer for processability and thermal resistance, and (a₂) 0 to 90 % by weight of a copolymer resin prepared by copolymerization with 60 to 90 parts by weight of an aromatic vinyl monomer, 10 to 40 parts by weight of a monomer copolymerizable with said aromatic vinyl monomer, and 0 to 30 parts by weight of a monomer for processability and thermal resistance; and (B) 0.1 to 15 parts by weight of a ring-shaped alkyl phosphonic acid compound. Also, the flameproof thermoplastic resin composition of the present invention may further contain (C) less than 10 parts by weight of aromatic phosphonic acid ester compound.

### Detailed Description of the Invention

### (A) Rubber-modified styrenic resin

The rubber modified styrenic resin according to the present invention is a polymer wherein rubber phase polymers are dispersed in the form of particles in a matrix obtained by polymerizing an aromatic vinyl monomer and a vinyl group-containing monomer, which can be polymerized therewith, in the presence of a rubber phase polymer. Such rubber-modified styrenic resin is prepared by a known method such as emulsion polymerization, suspension polymerization or bulk polymerization, and is conventionally produced by an extrusion with a styrene- containing graft copolymer resin and a styrene-containing copolymer resin. In a bulk polymerization, both a styrene-containing graft copolymer resin and a styrene- containing copolymer resin are prepared together in one process. In other polymerizations, a styrene-containing graft copolymer resin and a styrene-containing copolymer resin may be prepared separately. In either case, the contents of rubber in a final rubber-modified styrenic resin to the total weight of the base resin are preferably in 5 to 30 % by weight.

In the rubber modified styrenic resin, a graft copolymer resin can be used alone or in combination with a copolymer resin in consideration of compatibility thereof.

### (a₁) Graft copolymer resin

The graft copolymer of the present invention is prepared by graft- polymerizing rubber polymer, aromatic vinyl monomer, copolymerizable monomer with said aromatic vinyl monomer selected from cyanide vinyl-containing compounds and unsaturated nitrile-containing compounds and monomer which provides processability and heat resistance;

Examples of the rubber polymer are diene rubbers such as polybutadiene, poly(styrene-butadiene), poly(acrylonitrile-butadiene), etc; a saturated rubber in which hydrogen is added to said diene-containing rubber; isoprene rubber; a polybutyl acrylic acid; and a terpolymer of ethylene-propylene-diene (EPDM). It is preferable to use a diene-containing rubber, more preferably a butadiene-containing rubber. The content of rubber polymer in the graft copolymer resin is preferably in the range of 5 to 65 parts by weight based on the total weight of a graft copolymer resin

Examples of aromatic vinyl monomer are styrene, α-methyl styrene, p-methyl styrene, etc. In the above examples, styrene is the most preferable. The content of aromatic vinyl monomer in the graft copolymer resin is preferably in the range of 35 to 95 parts by weight based on the total weight of a graft copolymer resin.

In addition, in order to give good characteristics of processability and heat resistance, other monomers such as acrylic acid, methacryl acid, maleic anhydride and N-substituted maleimide can be added in the graft polymerization. The amounts of the monomers are in the range of 0 to 15% by weight based on the graft copolymer resin.

To acquire good impact strength and surface appearance when said graft copolymer is prepared, the average size of rubber particles is preferably in the range of from 0.1 to 4 µm.

### (a₂) Copolymer resin

The copolymer resin of the present invention is prepared copolymerizing aromatic vinyl monomer, copolymerizable monomer with the aromatic vinyl monomer, and monomer which provides processability and heat resistance depending on the ratio and compatibility between monomers except rubber in the graft copolymer.

The examples of the aromatic vinyl monomer are styrene, -methylstyrene, p-methylstyrene, etc. Styrene is the most preferable. The aromatic vinyl monomer in the total copolymer resin is contained in the amount of 60 to 90 parts by weight.

At least one copolymerizable monomer may be introduced and applied to the aromatic vinyl monomers. The examples of the copolymerizable monomer are cyanide vinyl group-containing compounds such as acrylonitrile and unsaturated nitrile-containing compounds such as methacrylonitrile. It is preferable that 10 to 40 parts by weight of the copolymerizable monomer to the total copolymer is employed.

In addition, 0 to 30 parts by weight of other monomers such as acrylic acid, methacrylic acid, maleic anhydride and N-substituted maleimide may be added and copolymerized thereto.

The examples of the rubber-modified styrenic resin (A) used in the present invention are acrylonitrile-butadiene-styrene (ABS) copolymer resin, acrylonitrile-ethylenepropylene rubber-styrene (AES) copolymer resin, acrylonitrile-acryl rubber-styrene (AAS) copolymer resin, and so on.

The rubber-modified styrene comprising resin (A) of the present invention is composed of 10 to 100 % by weight of the graft copolymer resin (a₁) and 0 to 90 % by weight of the copolymer resin (a₂), and preferably composed of 10 to 50 % by weight of the graft copolymer resin (a₁) and 50 to 90 % by weight of the copolymer resin (a₂). In the present invention, other components are mixed on the basis 100 parts by weight of the rubber-modified styrene comprising resin (A).

### (B) Ring-shaped alkyl phosphonic acid compound

The ring-shaped alkyl phosphonic acid compound of the present invention is represented by the following chemical Formula (): 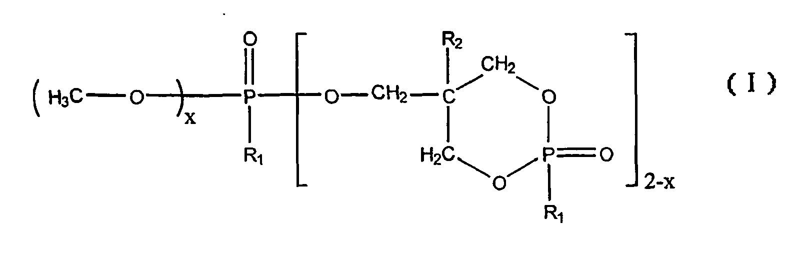 wherein R₁ and R₂ are independently of each other C₁-C₄ alkyl and x is 0 ∼1.

Examples of the ring-shaped alkyl phosphonic acid compound having the structural formular (I) include methyl-bis(5-ethyl-2-methyl-1,3,2-dioxaphorinan-5yl) methyl methyl phosphonic acid ester P-oxide, methyl-bis(5-ethyl-2-methyl-1,3,2-dioxaphorinan-5-yl) phosphonic acid ester P, P'-dioxide.

The ring-shaped alkyl phosphonic acid compound (B) of the present invention can be used alone or in combination therewith, with the amount of from 0.1 to 15 parts by weight, preferably 0.5 to 6 parts by weight, more preferably 0.5 to 2 parts by weight. If the amount of the ring-shaped alkyl phosphonic acid compound is added less than 0.1 parts by weight, the resin composition has poor flame retardancy. On the other hand, if the amount of the ring-shaped alkyl phosphonic acid compound is more than 15 parts by weight, heat resistance of the resin composition is lowered.

### (C) Aromatic phosphoric acid ester compound

The aromatic phosphoric acid ester compound used in the present invention is a compound having the following structural formular (II): 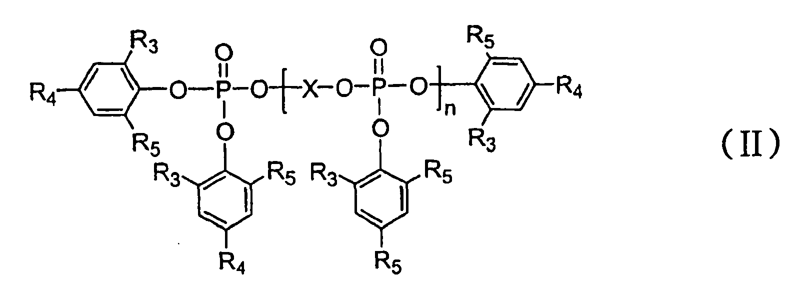 wherein R₃, R₄ and R₅ independently of one another are hydrogen or C₁₋₄ alkyl; X is a C₆₋₂₀ aryl group or alkyl-substituted C₆₋₂₀ aryl group that are derivatives from a dialcohol derivative such as resorcinol, hydroquinol and bisphenol-A; and n is 0∼4.

Where n is 0, the compound represented in the structural formular (II) is triphenyl phosphate, tri(2,6-dimethyl) phosphate, and the like, and where n is 1, the compounds include resorcinolbis(diphenyl) phosphate, resorcinolbis(2,6-dimethyl phenyl) phosphate, resorcinolbis(2,4-ditertiary butyl phenyl) phosphate, hydroquinolbis(2,6-dimethyl phenyl) phosphate, hydroquinolbis(2,4-ditertiary butyl phenyl) phosphate, and the like. The compounds can be used alone or in combination therewith. In the present invention, the aromatic phosphoric acid ester as an optional component can be used in the amount of less than 10 parts by weight, preferably 0 to 6 parts by weight.

Other additives may be contained in the resin composition of the present invention. The additives include heat stabilizers, anti-oxidants, light stabilizers, inorganic or organic pigments or dyes and/or inorganic filler. The additives are employed in an amount of 0 to 30 parts by weight as per 100 parts by weight of base resin (A).

The present invention may be better understood by reference to the following examples that are intended for the purpose of illustration and are not to be construed as in any way limiting the scope of the present invention, which is defined in the claims appended hereto.

### Examples

The components to prepare flameproof thermoplastic resin compositions in Examples 1 ∼ 3 and Comparative Examples 1 ∼ 2 are as follows:

### (A) Rubber Modified Styrene Comprising Resin

### (a₁) Graft copolymer resin

50 parts of butadiene rubber latex, 36 parts of styrene, 14 parts of acrylonitrile, and 150 parts of deionized water were mixed. To the mixture, 1.0 part of potassium oleate, 0.4 parts of cumenhydroperoxide, 0.2 parts of mercaptan-containing chain transfer agent, 0.4 parts of glucose, 0.01 parts of ferrous sulfate hydrate, and 0.3 parts of sodium pyrophosphate were added. The blend was kept at 75°C for 5 hours to obtain g-ABS latex. To the g-ABS latex, 0.4 parts of sulfuric acid was added, coagulated and dried to obtain rubber modified polystyrene resin (g-ABS) in a powder form.

### (a₂) Copolymer resin

75 parts of styrene, 25 parts of acrylonitrile, and 120 parts of deionized water were mixed. To the mixture, 0.2 parts of azobisisobutylonitrile (AIBN) 0.4 parts of tricalciumphosphate and 0.2 parts of mercaptan-containing chain transfer agent were added. The resultant solution was heated to 80 °C for 90 minutes and kept for 180 minutes. The resultant was washed, dehydrated and dried. Styrene-acrylonitrile copolymer (SAN) was obtained.

### (B) Ring-shaped Alkyl Phosphonic Acid Compound

Antiblaze 1045 of Rhodia Co. [a mixture of 8 % by weight of methyl-bis (5-ethyl-2-methyl-1,3,2-dioxaphosphorinan-5-yl) methyl methyl phosphonic acid ester P-oxide and 85 % by weight of methyl-bis (5-ethyl-2-methyl-1,3,2 -dioxaphosphorinan-5-yl) phosphonic acid ester P, P'-dioxide] was used.

### (C) Aromatic Phosphoric Acid Ester Compound

Resorcinol bis (2,6-dimethylphenyl)phosphate by Daihachi Chemical of Japan (product name: PX200) was used.

### Examples 1∼3

The components as shown in Table 1 were mixed and the mixture was extruded at 180∼250 °C with a conventional twin screw extruder in pellets. The resin pellets were dried at 80 °C for 3 hours, and molded into test specimens using a 6 oz injection molding machine at 180∼280°C and barrel temperature of 40∼80°C.

The flame retardancy of the test specimens was measured in accordance with UL94VB with a thickness of 1/8" and 1/12" respectively. The impact strength was measured according to Izod impact strength ASTM D-256 A (1/8" notch). The heat resistance was measured according to ASTM D-1525 under 5 kg.

### Comparative Examples 1∼2

Comparative Examples 1 was conducted in the same manner as in Example 1 except that the ring-shaped alkyl phosphonic acid compound was not used. Comparative Examples 2 was conducted in the same manner as in Example 1 except that the aromatic phosphoric acid ester compound was used as a flame retardant instead of the ring-shaped alkyl phosphonic acid compound. The test results are presented in Table 1.

**Table 1**

| | | Examples | | | Comparative Examples | |
|---|---|---|---|---|---|---|
| | | 1 | 2 | 3 | 1 | 2 |
| (A) Rubber Modified Styrene Comprising Resin | (a₁) | 32 | 32 | 32 | 32 | 32 |
| | (a₂) | 68 | 68 | 68 | 68 | 68 |
| (B) Ring-shaped Alkyl Phosphonic Acid Compound | | 1 | 3 | 2 | - | - |
| (C) Aromatic Phosphoric Acid Ester Compound | | - | - | 2 | - | 6 |
| UL94 flame retardancy (1/12") | | V-2 | V-2 | V-2 | Fail | V-2 |
| UL94 flame retardancy (1/8") | | V-2 | V-2 | V-2 | Fail | V-2 |
| Izod impact strength (kgf · cm/cm) | | 26 | 24 | 22 | 34 | 20 |
| Vicat Softening Temperature (°C) | | 94 | 92 | 92 | 94 | 88 |

As shown above, the resin compositions employing a ring-shaped alkyl phosphonic acid compound as a flame retardant show good flame retardancy without deterioration of impact strength and heat resistance compared to comparative examples 1-2.

The present invention can be easily carried out by an ordinary skilled person in the art. Many modifications and changes may be deemed to be with the scope of the present invention as defined in the following claims.

## Claims

1. A flameproof thermoplastic resin composition comprising:
(A) 100 parts by weight of a rubber modified styrene comprising resin consisting of (a₁) 10 to 100 % by weight of a grafted copolymer resin prepared by graft polymerization with 5 to 65 parts by weight of a rubber phase polymer, 35 to 95 parts by weight of an aromatic vinyl monomer, 1 to 20 parts by weight of a monomer copolymerizable with said aromatic vinyl monomer selected from cyanide vinyl-containing compounds and unsaturated nitrile-containing compounds and 0 to 15 parts by weight of a monomer for processability and thermal resistance, and (a₂) 0 to 90 % by weight of a copolymer resin prepared by copolymerization with 60 to 90 parts by weight of an aromatic vinyl monomer, 10 to 40 parts by weight of a monomer copolymerizable with said aromatic vinyl monomer and 0 to 30 parts by weight of a monomer for processability and thermal resistance; and (B) 0.1 to 15 parts by weight of a ring-shaped alkyl phosphonic acid compound represented by the following formula (I): 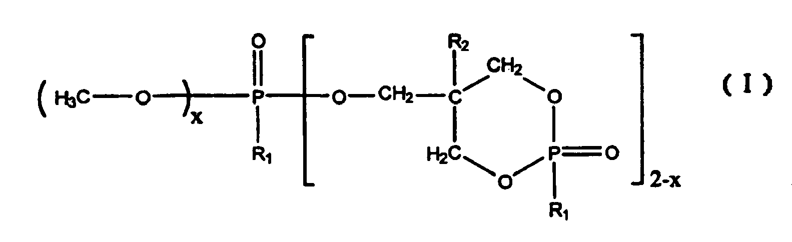
wherein R₁ and R₂ are independently of each other C₁-C₄ alkyl and x is 0∼1.

2. The flame retardant styrenic resin composition as defined in claim 1, further comprising less than 10 parts by weight of aromatic phosphoric acid ester compound(C) represented by the following formula (II): 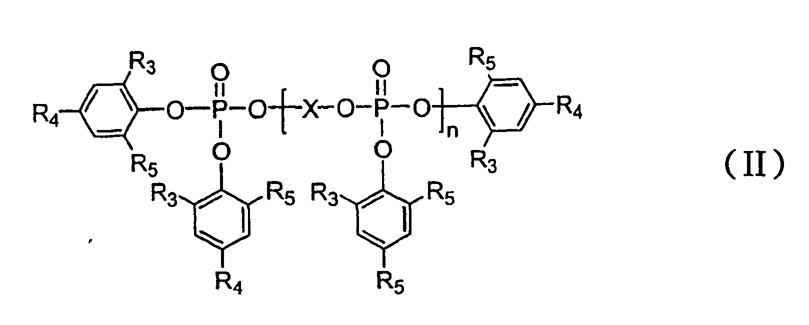 wherein R₃, R₄ and R₅ independently of one another are hydrogen or C₁₋₄ alkyl; X is a C₆₋₂₀ aryl group or alkyl-substituted C₆₋₂₀ aryl group that are derivatives from a dialcohol derivative such as resorcinol, hydroquinol, bisphenol-A; and n is 0∼4.

3. The flame retardant styrenic resin composition as defined in claim 1, wherein said rubber polymer is selected from the group consisting of diene rubbers, saturated rubbers in which hydrogen is added to said diene-containing rubber, isoprene rubbers; acryl rubbers; and a terpolymer of ethylene-propylene-diene (EPDM); said aromatic vinyl monomer is selected from the group consisting of styrene, α-methyl styrene, p-methyl styrene; said monomer copolymerizable with said aromatic vinyl monomer is selected from cyanide vinyl-containing compounds and unsaturated nitrile-containing compounds; said monomer for providing processability and heat resistance is selected from the group consisting of acrylic acid, methacryl acid, maleic anhydride and N-substituted maleimide.

4. The flame retardant styrenic resin composition as defined in claim 1, wherein said rubber modified styrene comprising resin (A) is selected from the group consisting of acrylonitrile-butadiene-styrene copolymer resin, acrylonitrile-ethylenepropylene rubber-styrene copolymer resin, and acrylonitrile-acryl rubber-styrene copolymer resin.

5. The flame retardant styrenic resin composition as defined in claim 1, wherein said ring-shaped alkyl phosphonic acid compound is selected from the group consisting of methyl-bis(5-ethyl-2-methyl-1,3,2-dioxaphosphorinan-5-yl) methyl methyl phosphonic acid ester P-oxide, and methyl-bis(5-ethyl-2-methyl-1,3,2-dioxaphosphorinan-5-yl) phosphonic acid ester P, P'-dioxide.

6. The flame retardant styrenic resin composition as defined in claim 1, which further comprises heat stabilizers, anti-oxidants, light-stabilizers, compatibilizers, pigment, dye or inorganic filler.

## Patentansprüche

1. Flammhemmende thermoplastische Zusammensetzung, umfassend:
(A) 100 Gewichtsteile eines kautschukmodifizierten Styrol umfassenden Harzes, bestehend aus (a₁) 10 bis 100 Gewichts-% eines Pfropfcopolymerharzes, hergestellt durch Pfropfpolymerisation mit 5 bis 65 Gewichtsteilen eines Kautschukphasenpolymers, 35 bis 95 Gewichtsteilen eines aromatischen Vinylmonomers, 1 bis 20 Gewichtsteilen eines mit dem aromatischen Vinylmonomer copolymerisierbaren Monomers, ausgewählt aus cyanidvinylhaltigen Verbindungen und ungesättigten nitrilhaltigen Verbindungen, und 0 bis 15 Gewichtsteilen eines Monomers für Verarbeitungsfähigkeit und Wärmefestigkeit, und (a₂) 0 bis 90 Gewichts-% eines Copolymerharzes, hergestellt durch Copolymerisation mit 60 bis 90 Gewichtsteilen eines aromatischen Vinylmonomers, 10 bis 40 Gewichtsteilen eines mit dem aromatischen Vinylmonomer copolymerisierbaren Monomers und 0 bis 30 Gewichtsteilen eines Monomers für Verarbeitungsfähigkeit und Wärmefestigkeit; und (B) 0,1 bis 15 Gewichtsteile einer ringförmigen Alkylphosphonsäureverbindung, dargestellt durch die folgende Formel (I): 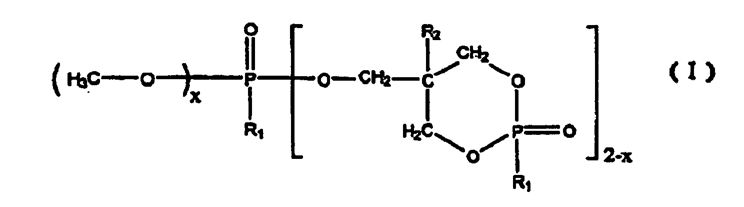
wobei R₁ und R₂ unabhängig voneinander C₁-C₄-Alkyl sind und x 0∼1 ist.

2. Flammhemmende Styrolharzzusammensetzung wie in Anspruch 1 definiert, des Weiteren umfassend weniger als 10 Gewichtsteile einer aromatischen Phosphorsäureesterverbindung (C), dargestellt durch die folgende Formel (II): 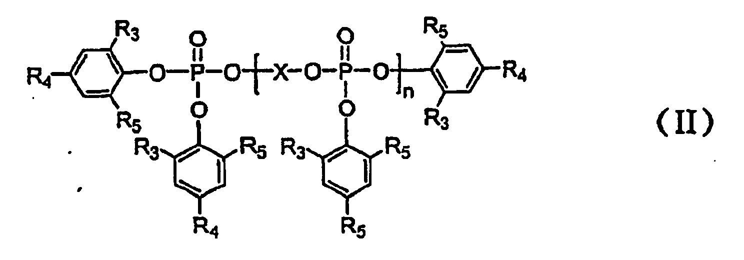 wobei R₃, R₄ und R₅ unabhängig voneinander Wasserstoff oder C₁-₄-Alkyl sind; X eine C₆₋₂₀-Arylgruppe oder alkylsubstituierte C₆₋₂₀-Arylgruppe ist, die Derivate von einem Dialkoholderivat wie Resorcinol, Hydrochinol, Bisphenol-A sind; und n 0∼4 ist.

3. Flammhemmende Styrolharzzusammensetzung wie in Anspruch 1 definiert, wobei das Kautschukpolymer ausgewählt ist aus der Gruppe, bestehend aus Dienkautschuks, gesättigten Kautschuks, in welchen Wasserstoff an den dienhaltigen Kautschuk addiert ist, Isoprenkautschuks; Acrylkautschuks; und einem Terpolymer von Ethylen-Propylen-Dien (EPDM); das aromatische Vinylmonomer ausgewählt ist aus der Gruppe, bestehend aus Styrol, α-Methylstyrol, p-Methylstyrol; das mit dem aromatischen Vinylmonomer copolymerisierbare Monomer ausgewählt ist aus cyanidvinylhaltigen Verbindungen und ungesättigten nitrilhaltigen Verbindungen; das Monomer zum Bereitstellen von Verarbeitungsfähigkeit und Wärmefestigkeit ausgewählt ist aus der Gruppe, bestehend aus Acrylsäure, Methacrylsäure, Maleinsäureanhydrid und N-substituiertem Maleimid.

4. Flammhemmende Styrolharzzusammensetzung wie in Anspruch 1 definiert, wobei das kautschukmodifizierte Styrol umfassende Harz (A) ausgewählt ist aus der Gruppe, bestehend aus Acrylnitril-Butadien-Styrol-Copolymerharz, Acrylnitril-Ethylenpropylenkautschuk-Styrol-Copolymerharz und Acrylnitril-Acrylkautschuk-Styrol-Copolymerharz.

5. Flammhemmende Styrolharzzusammensetzung wie in Anspruch 1 definiert, wobei die ringförmige Alkylphosphonsäureverbindung ausgewählt ist aus der Gruppe, bestehend aus Methylbis(5-ethyl-2-methyl-1,3,2-dioxaphosphorinan-5-yl)methylmethylphosphonsäureester-P-oxid und Methylbis(5-ethyl-2-methyl-1,3,2-dioxaphosphorinan-5-yl)phosphonsäureester-P,P'-dioxid.

6. Flammhemmende Styrolharzzusammensetzung wie in Anspruch 1 definiert, die des weiteren Wärmestabilisatoren, Antioxidationsmittel, Lichtstabilisatoren, Verträglichmacher, Pigment, Farbstoff oder anorganischen Füllstoff umfasst.

## Revendications

1. Composition de résine thermoplastique ignifugeante, comprenant
(A) 100 parties en poids d'une résine comprenant du styrène modifié par du caoutchouc, consistant en (a₁) 10 à 100 % en poids d'une résine d'un copolymère greffé préparée par polymérisation par greffage avec 5 à 65 parties en poids d'un polymère en phase caoutchouc, 35 à 95 parties en poids d'un monomère vinylaromatique, 1 à 20 parties en poids d'un monomère copolymérisable avec ledit monomère vinylaromatique, choisi parmi les composés contenant du cyanure de vinyle et les composés contenant du nitrile insaturé, et 0 à 15 parties en poids d'un monomère pour l'aptitude à la mise en oeuvre et la résistance thermique, et (a₂) 0 à 90 % en poids d'une résine copolymère préparée par copolymérisation avec 60 à 90 parties en poids d'un monomère vinylaromatique, 10 à 40 parties en poids d'un monomère copolymérisable avec ledit monomère vinylaromatique et 0 à 30 parties en poids d'un monomère pour l'aptitude à la mise en oeuvre et la résistance thermique, et (B) 0,1 à 15 parties en poids d'un composé acide alkylphosphonique cyclique représenté par la formule (I) ci-après : 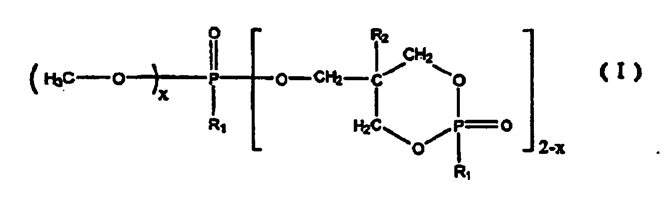 dans laquelle R₁ et R₂ représentent chacun indépendamment de l'autre un radical alkyle en C₁-C₄, et x vaut 0 à 1.

2. Composition de résine styrénique retardatrice de flamme selon la revendication 1, qui comprend en outre moins de 10 parties en poids d'un composé ester de l'acide phosphorique aromatique (C) représenté par la formule (II) ci-après : 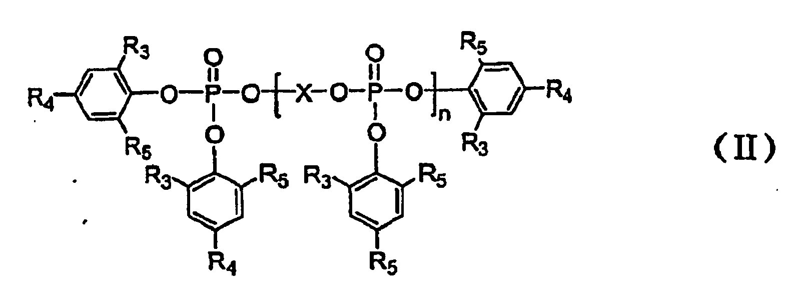 dans laquelle R₃, R₄ et R₅ représentent chacun indépendamment des autres un atome d'hydrogène ou un radical alkyle en C₁₋₄ ; X est un groupe aryle en C₆₋₂₀ ou un groupe aryle en C₆₋₂₀ à substitution alkyle, qui est un dérivé d'un dérivé dialcool tel que le résorcinol, l'hydroquinol, le bisphénol-A ; et n vaut 0-4.

3. Composition de résine styrénique retardatrice de flamme selon la revendication 1, dans laquelle ledit polymère caoutchouteux est choisi dans le groupe consistant en les caoutchoucs diènes, les caoutchoucs saturés dans lesquels de l'hydrogène est ajouté audit caoutchouc contenant des diènes, les caoutchoucs isoprènes ; les caoutchoucs acryliques ; et un terpolymère éthylène-propylène-diène (EPDM) ; ledit monomère vinylaromatique choisi dans le groupe consistant en le styrène, l'α-méthylstyrène, le p-méthylstyrène ; ledit monomère copolymérisable avec ledit monomère vinylaromatique est choisi parmi les composés contenant du cyanure de vinyle et les composés contenant un nitrile insaturé ; ledit monomère assurant l'aptitude à la mise en oeuvre et la résistance à la chaleur est choisi dans le groupe consistant en l'acide acrylique, l'acide méthacrylique, l'anhydride maléique et le maléimide N-substitué.

4. Composition de résine styrénique retardatrice de flamme selon la revendication 1, dans laquelle ladite résine (A) comprenant du styrène modifié par du caoutchouc est choisie dans le groupe consistant en une résine copolymère acrylonitrile-butadiène-styrène, une résine copolymère acrylonitrile-caoutchouc éthylène-propylène-styrène, et une résine copolymère acrylonitrile-caoutchouc acrylique-styrène.

5. Composition de résine styrénique retardatrice de flamme selon la revendication 1, dans laquelle ledit composé de l'acide alkylphosphonique cyclique est choisi dans le groupe consistant en le P-oxyde de l'ester méthylique de l'acide bis(5-éthyl-2-méthyl-1,3,2-dioxa-phosphorinann-5-yl)méthylméthylphosphonique et le P,P'-dioxyde de l'ester méthylique de l'acide bis(5-éthyl-2-méthyl-1,3,2-dioxaphosphorinann-5-yl)phosphonique.

6. Composition de résine styrénique retardatrice de flamme selon la revendication 1, qui comprend en outre des stabilisants thermiques, des antioxydants, des photostabilisants, des agents de compatibilisation, un pigment, un colorant ou une charge inorganique.
